# EUROPEAN PATENT APPLICATION

(11) **EP 4 435 031 A1**
(43) Date of publication of application: **25.09.2024**
(21) Application number: 22895670.2
(22) Date of filing: 17.11.2022
(51) Int. Cl.: C08G 59/68, C08G 59/50

(54) **CURING AGENT CAPABLE OF IMPROVING PRESERVABILITY, METHOD FOR PRODUCING SAME, AND CURABLE RESIN COMPOSITION USING SAME**

(30) Priority: 18.11.2021 JP 2021187465
(71) Applicant: ThreeBond Co., Ltd., Tokyo 192-0398 (JP)
(72) Inventor: KODAMA, Tomoya, Hachioji-shi, Tokyo 192-0398 (JP); SUZUKI, Hironori, Hachioji-shi, Tokyo 192-0398 (JP); WATANABE, Kuniyuki, Hachioji-shi, Tokyo 192-0398 (JP); MATSUO, Kanako, Hachioji-shi, Tokyo 192-0398 (JP); MATSUSHITA, Yui, Hachioji-shi, Tokyo 192-0398 (JP)
(74) Representative: Haseltine Lake Kempner LLP
(86) International application number: PCT/JP2022/042686
(87) International publication number: WO 2023/090389

(57) **Abstract**

[Problem] The present invention has an object to provide a curing agent which can suppress the viscosity change of a curable resin composition made into a one-pack type one, and has no influence on physical properties of a cured material.

[Solution] The treated curing agent is obtained by mixing and dispersing the following components (A) to (C) and thereafter removing the component (B):
component (A): a curing agent being solid at 25°C;
component (B): a solvent that does not dissolve the component (A); and
component (C): a metal alkoxide compound.

## Description

### TECHNICAL FIELD

The present invention relates to a curing agent for improving storage life when being mixed with a curable resin composition, a method for producing the same, and a curable resin composition using the same.

### BACKGROUND ART

In making curable resin compositions into one-pack type ones, curing agents have been used which are activated by energy of heat or the like and can cure resins. Since due to that these curable resin compositions are made into one-pack type ones, a resin and a curing agent always contact with each other, however, in particular, in curable resin compositions using a curing agent which is activated at low temperatures, such a problem arises that a reaction progresses only by being kept placed for a long time and the curable resin composition ends in being cured before use. To address the problem, means is known which improves the storage life by adding a reaction inhibitor such as a borate ester (see Japanese Patent Laid-Open No. 09-268224). It is also known that the gel time until the flowability disappears can be improved by adding a metal alkoxide to an epoxy resin composition (see Japanese Patent Laid-Open No. 7-196776) .

### SUMMARY OF INVENTION

The reaction inhibitor used in Japanese Patent Laid-Open No. 09-268224, however, when being added too much in order to improve the storage life, has fears of developing an influence on physical properties of a cured material and dissolving the curing agent itself to conversely worsen the storage life. Further, the means used in Japanese Patent Laid-Open No. 7-196776 can improve the gel time until the flowability disappears, but cannot be said to provide a sufficient storage life because it is important that a curable resin composition is one in which properties including viscosity hardly change before and after storage so that feeling of use does not vary.

As a result of exhaustive studies to improve the above problem, the present inventors have found a treated curing agent which can suppress the viscosity change of a curable resin composition made into a one-pack type one and does not affect physical properties of a cured material, and means of producing the same; and this finding has led to the completion of the present invention.

The gist of the present invention will be described hereinafter.
[1] A treated curing agent obtained by mixing and dispersing the following components (A) to (C) and thereafter removing the component (B):
   component (A): a curing agent being solid at 25°C;
   component (B): a solvent that does not dissolve the component (A); and
   component (C): a metal alkoxide compound.
[2] The treated curing agent according to [1], wherein the metal in the component (C) is titanium or zirconium.
[3] The treated curing agent according to [1] or [2], wherein the component (C) is represented by the general formula M(OR¹)ₙ; and in the formula, M is a metal atom, and R¹ are each independently an organic group.
[4] The treated curing agent according to any one of [1] to [3], wherein the component (A) is a curing agent having thermocurability and being solid at 25°C.
[5] The treated curing agent according to any one of [1] to [4], wherein the component (A) is an amine compound.
[6] The treated curing agent according to [5], wherein the component (A) is a powdery amine compound.
[7] The treated curing agent according to any one of [1] to [6], further comprising no solvent that dissolves the component (A).
[8] The treated curing agent according to any one of [1] to [7], produced only with the components (A) to (C).
[9] The treated curing agent according to any one of [1] to [7], produced by mixing further a silica as an additional component in the step of mixing the components (A) to (C).
[10] The treated curing agent according to any one of [1] to [7] and [9], produced only with the components (A) to (C) and a silica.
[11] The treated curing agent according to [9] or [10], wherein the average particle diameter of the silica is smaller than the average particle diameter of the component (A).
[12] A curing agent, comprising the following components (A) and (C) and a hydrophobic silica:
   component (A): a curing agent being solid at 25°C; and
   component (C): a metal alkoxide compound.
[13] The curing agent according to [12], containing only the following components (A) and (C) and the hydrophobic silica: component (A): a curing agent being solid at 25°C; and component (C) : a metal alkoxide compound.
[14] The curing agent according to [12] or [13], wherein the average particle diameter of the hydrophobic silica is smaller than the average particle diameter of the component (A).
[15] A method for producing a treated curing agent according to any one of [1] to [11], comprising mixing and dispersing the following components (A) to (C) and thereafter removing the component (B) to obtain the treated curing agent:
   component (A): a curing agent being solid at 25°C;
   component (B) : a solvent that does not dissolve the component (A); and
   component (C): a metal alkoxide compound.
[16] The production method according to [15], wherein only the components (A) to (C) are mixed.
[17] The production method according to [15], wherein a silica is mixed as an additional component in the step of mixing the components (A) to (C).
[18] The production method according to [17], wherein only the components (A) to (C) and the silica are mixed.
[19] A curable resin composition comprising a curable resin and a treated curing agent according to any one of [1] to [11].
[20] The curable resin composition according to [19], wherein the curable resin is an epoxy resin.
[21] A cured material obtained by curing a curable resin composition according to [19] or [20].

### DESCRIPTION OF EMBODIMENTS

Then, the detail of the present invention will be described. Here, in the present description, "X to Y" is used in the meaning including the numerical values (X and Y) described before and after "to" as the lower limit value and the upper limit value, and means "X or more and Y or less". Further, in the present description, the term "(meth)acrylic" means acrylic and/or methacrylic.

The present invention is a treated curing agent obtained by mixing and dispersing the following components (A) to (C) and thereafter removing the component (B):
component (A): a curing agent being solid at 25°C;
component (B): a solvent that does not dissolve the component (A); and
component (C): a metal alkoxide compound.

The treated curing agent according to the present invention having such a constitution does not affect physical properties of a cured material and can suppress the rise in the viscosity in storage of a curable resin composition made into a one-pack type one.

### [component (A)]

The component (A) usable in the present invention is a curing agent being solid at 25°C. The component (A) is not especially limited as long as being solid at 25°C, and being a component to cause a resin component to be cured, but is, from the viewpoint of the storage life and the curability, preferably one having a melting point of 50 to 350°C and more preferably one having a melting point of 70 to 300°C. The melting point is measured by a melting point measuring device. The shape and size of the component (A) are not especially limited, but it is preferable that the component (A) is a microparticle or a powder, for making large the contact area with a curable resin to make the reaction easy. The average particle diameter (50% average particle diameter) of the component (A) is preferably 0.1 to 50 µm, more preferably 1 to 30 µm and especially preferably 3 to 20 µm. The average particle diameter is a particle diameter (D50) at a cumulative ratio of 50% in a particle size distribution determined by a laser diffraction scattering method.

The component (A) includes amine compounds, thiol compounds, acid anhydrides, thermo-cationic initiators and photo-cationic initiators. Among these, from the viewpoint of simultaneously satisfying both the reactivity and the storage stability, thermocurable compounds are preferable and amine compounds are more preferable. The amine compounds include imidazole compounds, adduct-type latent curing agents (reaction products obtained by reacting an amine compound with an epoxy compound, an isocyanate compound or a urea compound), dicyandiamide, hydrazide compounds and boron trifluoride-amine complexes, and preferable are the imidazole compounds and the adduct-type latent curing agents. These may be used singly, or may be used concurrently in two or more kinds, but in the case where two or more kinds are concurrently used, as a solvent that does not dissolve the component (A), which solvent is a component (B) described later, a solvent that does not dissolve all the components (A) needs to be used.

The imidazole compounds are not especially limited, but examples thereof include 2-methylimidazole, 2-heptadecylimidazole, 2-phenylimidazole, 2-phenyl-4-methylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, 2,4-diamino-6-[2'-methylimidazolyl-(1')]-ethyl-s-triazine isocyanuric acid adducts, 2-phenylimidazole isocyanuric acid adducts, 2-methylimidazole isocyanuric acid adducts, 2-phenyl-4,5-dihydroxymethylimidazole, 2-phenyl-4-methyl-5-hydroxymethylimidazole, 2-methylimidazoline, 2-phenylimidazoline and 2,3-dihydro-1H-pyrrolo[1,2-a]benzimidazole. Commercially available products thereof include Curezol SIZ, 2MZ-H, C11Z, C17Z, 1.2DMZ, 2E4MZ, 2PZ, 2PZ-PW, 2P4MZ, 1B2MZ, 1B2PZ, 2MZ-CN, C11Z-CN, 2E4MZ-CN, 2PZ-CN, 2PZCNS-PW, 2MZ-A, 2MZA-PW, C11Z-A, 2E4MZ-A, 2MA-OK, 2MAOK-PW, 2PHZ-PW, 2P4MHZ-PW, 2PZL-T, VT and MAVT (manufactured by SHIKOKU CHEMICALS CORPORATION.).

The adduct-type latent curing agents are not especially limited, but examples thereof include reaction products (urea adduct-type latent curing agents) obtained by reacting an amine compound with an isocyanate compound or a urea compound, and reaction products (epoxy-amine adduct-type latent curing agents) of an amine compound with an epoxy compound. Among the urea adduct-type latent curing agents, modified aliphatic polyamine-based latent curing agents are preferably used; and among the epoxy-amine adduct-type latent curing agents, imidazole adduct-based latent curing agents are preferably used. Examples of commercially available products of the urea adduct-type latent curing agents include Fujicure FXE-1000, FXR-1020, FXR-1030, FXB-1050 and FXR-1081 (manufactured by T&K TOKA CO. LTD.). Examples of commercially available products of the epoxy-amine adduct-type latent curing agents include Amicure PN-23, Amicure PN-H, Amicure PN-31, Amicure PN-40, Amicure PN-50, Amicure PN-F, Amicure PN-23J, Amicure PN-31J, Amicure cure PN-40J, Amicure MY-24, Amicure MY-25, Amicure MY-R and Amicure PN-R (manufactured by Ajinomoto Fine-Techno Co., Inc.).

### [component (B)]

The component (B) usable in the present invention is a solvent that does not dissolve the component (A). The component (B) is not especially limited as long as being a solvent that does not dissolve the component (A), but depending on the kind of the component (A), a most suitable solvent needs to be selected. The solvent includes water and organic solvents. Examples of the organic solvents include aromatic organic solvents such as toluene and xylene; aliphatic organic solvents such as n-pentane and n-hexane; alicyclic organic solvents such as cyclohexane, methylcyclohexane and ethylcyclohexane; ketone-based organic solvents such as acetone and methyl ethyl ketone; alcoholic organic solvents such as methanol and ethanol; ester-based organic solvents such as ethyl acetate and butyl acetate; and propylene glycol ether-based organic solvents such as propylene glycol methyl ether, propylene glycol ethyl ether and propylene glycol t-butyl ether. For the above amine compounds, from the viewpoint of dissolvability and volatility, the component (B) is, though not limited to, preferably an aliphatic organic solvent or an alicyclic organic solvent, more preferably an aliphatic organic solvent and most preferably n-hexane. These may be used singly, or may be used concurrently in two or more kinds, but in the case where the component (A) concurrently uses two or more kinds, a mixed solvent needs to be selected in which any one solvent in the two or more kinds does not dissolve the component (A). Then, in the case where the component (A) concurrently uses two or more kinds, a solvent needs to be selected which does not dissolve any one of the two or more kinds of the component (A). The checking of the dissolution is made by charging the component (A) and the component (B) in a closed transparent glass container, allowing the glass container to stand at room temperature for 60 min and thereafter visually observing whether the component (A) has not changed.

The component (B) is preferably one having volatility at room temperature from the viewpoint that the component (B) is easily removed in a step of removing the component (B) in a production method described later. Specifically, the boiling point of the component (B) is preferably 30 to 150°C, more preferably 40 to 100°C and especially preferably 50 to 80°C. In the case where in the step of removing the component (B), heat is applied by a hot air drying oven for volatilization, there is conceivably some influence in use as a curable resin composition.

The content of the component (B) is not especially limited, but is, with respect to 100 parts by mass of the component (A), preferably 10 to 1,000 parts by mass, more preferably 50 to 800 parts by mass and most preferably 100 to 500 parts by mass. Due to 10 parts by mass or higher, the dispersing of the component (A) is easily carried out; and due to 1,000 parts by mass or lower, the workability is excellent in the step of removing the component (B). Then, in the case of using two or more kinds of the component (B), the above content means the total amount thereof.

### [component (C)]

The component (C) usable in the present invention is a metal alkoxide compound. The metal alkoxide is a compound represented by the general formula M(OR¹), wherein M denotes a metal atom; R¹ are each independently an organic group, preferably a saturated or unsaturated hydrocarbon group (preferably a saturated or unsaturated hydrocarbon group having 1 to 30 carbon atoms, more preferably a saturated or unsaturated hydrocarbon group having 1 to 20 carbon atoms, most preferably a saturated or unsaturated hydrocarbon group having 2 to 7 carbon atoms); and n denotes an integer of 1 to 5. By using the component (C), the treated curing agent can be provided which gives few agglomerates and can suppress the viscosity change in storage when being used as a curable resin composition. The reason for these effects is not clear, but is conceivably because when the present component contacts with the component (A) in the component (B), due to that the present component is adsorbed on the surface of the component (A), the contact between the components (A) and between the component (A) and a curable resin can be suppressed.

The metal atom of the component (C) includes titanium, zirconium, aluminum, lithium, sodium and magnesium, but from the viewpoint of the dispersibility and that the viscosity change in storage when being used as a curable resin composition is suppressed, the metal atom is preferably titanium, zirconium or aluminum and most preferably titanium or zirconium.

Specific examples of the component (C) include titanium tetraisopropoxide, titanium tetra-normal butoxide, titanium butoxide dimer, titanium tetra-2-ethylhexoxide, zirconium tetra-normal propoxide, zirconium tetra-normal butoxide and aluminum secondary butoxide, but are not limited to these. These may be used singly, or may be used concurrently in two or more kinds.

Commercially available products of the component (C) include Orgatix TA-8, TA-21, TA-23, TA-30, ZA-45, ZA-65 and AL-3001 (manufactured by Matsumoto Fine Chemical Co. Ltd.).

The content of the component (C) is, with respect to 100 parts by mass of the component (A), preferably 0.1 to 20 parts by mass, more preferably 0.2 to 15 parts by mass and most preferably 0.5 to 10 parts by mass. Due to 0.1 parts by mass or higher, the viscosity change in storage when being used as a curable resin composition can be suppressed; and when the content is 20 parts by mass or lower, the component (C) when being used as a curable resin composition does not affect physical properties of a cured material. Then, in the case of using two or more kinds of the component (C), the content means the total amount of the two or more kinds.

### [Other components]

In the present invention, in addition to the above components, there can be used additives such as silane coupling agents, fillers, metal compounds other than the component (C), solvents other than the component (B), storage stabilizers, antioxidants, light stabilizers, rust preventives, tackifiers, plasticizers, colorants, rheology controllers, flame retardants and surfactants, within a range that does not impair the purpose of the present invention; but for the reason of not inhibiting contact between the component (A) and the component (C), in the present invention, it is preferable that the treated curing agent is produced by using only the components (A) to (C) and specific other components, and for example, in one embodiment, it is preferable to use only the components (A) to (C) and a silica. Further, it is preferable to use only the components (A) to (C), because contact between the component (A) and the component (C) is not inhibited.

Examples of the silane coupling agents include glycidyl group-containing silane coupling agents such as 3-glycidoxypropyltriethoxysilane, 3-glycidoxypropylmethyldimethoxysilane, 3-glycidoxypropyltrimethoxysilane and 3-glycidoxypropylmethyldiethoxysilane, vinyl group-containing silane coupling agents such as vinyltris(β-methoxyethoxy)silane, vinyltriethoxysilane and vinyltrimethoxysilane, (meth)acrylic group-containing silane coupling agents such as γ-methcryloxypropyltrimethoxysilane, amino group-containing silane coupling agents such as N-β-(aminoethyl)-γ-aminopropyltrimethoxysilane, γ-aminopropyltriethoxysilane and N-phenyl-γ-aminopropyltrimethoxysilane, γ-mercaptopropyltrimethoxysilane, γ-chloropropyltrimethoxysilane, and oligomers of these. These may be used singly, or may be used concurrently in two or more kinds.

The fillers include inorganic fillers and organic fillers. Examples of the inorganic fillers include fillers composed of glass, silica, talc, alumina, mica, ceramics, silicone particles, calcium carbonate, aluminum nitride, carbon powder, kaolin clay, dry clay minerals, dry diatomaceous earth, or various metals; examples of the organic fillers include organic powders constituted of rubber, elastomer or polymer (copolymer), organic fillers having a multilayer structure such as core-shell type, and fillers composed of butadiene rubber, acrylic rubber, butyl rubber, olefin rubber, styrene rubber, NBR, SBR, IR, EPR or the like. These may be ones surface treated with a fatty acid, a silane compound or the like. These may be used singly, or may be used concurrently in two or more kinds. Among these, from the viewpoint of the effect of improving the storage life, the filler is preferably a silica. In the case of using a silica, the reason of attaining the effect of improving the storage life is, though being a mere presumption, conceivably because the silica attaches physically onto the surface of the curing agent and thereby inhibits contact between the curing agent and an epoxy resin described later. Hence, the particle diameter of the silica is preferably smaller than the average particle diameter of the component (A), and is, for example, preferably 1 to smaller than 100 nm, and more preferably 1 to 50 nm. Among silicas, preferably used is a surface-hydrophobized silica surface-treated with dimethylsilane, trimethylsilane, alkylsilane, methacryloxysilane, organochlorosilane, polymethylsiloxane, hexamethyldisilazane or the like; and more preferably used is a surface-hydrophobized silica surface-treatment with an alkylsilane. Examples of commercially available products of silica include Aerosil R972, R972V, R972CF, R974, R976, R976S, R9200, RX50, NAX50, NX90, RX200, RX300, R812, R812S, R8200, RY50, NY50, RY200S, RY200, RY300, R104, R106, R202, R805, R816, T805, R711, RM50, R7200 and the like (manufactured by Nippon Aerosil Co. Ltd.). In one preferred embodiment of the present invention, the treated curing agent is produced by using only the components (A) to (C) and a silica.

The solvents other than the component (B) include solvents which are capable of dissolving the component (A), but in the present invention, it is preferable that substantially no solvents other than the component (B) are contained. Here, the "substantially no solvents other than the component (B) are contained" includes the concept that no solvents other than the component (B) at all are contained in a composition, and besides, the case where the solvents other than the component (B) are contained in 1 part by mass or less with respect to 100 parts by mass of the component (A). The content of the solvents other than the component (B) is preferably 0.1 parts by mass or less, more preferably 0.01 parts by mass or less, and most preferably 0 parts by mass, that is, it is most preferable that no solvents other than the component (B) at all are contained. When a solvent which is capable of dissolving the component (A) is contained, it is conceivable that agglomerates of the curing agent produced by a production method described later increase, worsening the dispersibility to a curable resin composition, and causing an unfavorable viscosity change in storage of the curable resin composition. Examples of the solvents other than the component (B), in the case where the component (A) is an amine compound, include aromatic organic solvents such as toluene and xylene, and ketone-based organic solvents such as acetone and methyl ethyl ketone.

The content of these other components in the composition is, with respect to 100 parts by mass of the component (A), preferably 0.1 to 100 parts by mass, more preferably 0.5 to 25 parts by mass and still more preferably 1 to 10 parts by mass. Due to that the content of the other components is in the above range, the inhibition of contact between the component (A) and the component (C) can be avoided. Here, in the case where the other components are used in two or more kinds, the content means the total amount of the two or more kinds.

### [Method for producing the treated curing agent]

In the present invention, there is provided a method for producing the curing agent which is improved in the storage life when being mixed with a curable resin composition. The production method carries out a dispersion step and a step of removing the component (B).

The dispersion step is not especially limited, but includes, for example, a method in which the components (A) to (C) and the other components are mixed and thereafter stirred by an impeller, a stirring bar, a rotary and revolutionary stirrer or the like. The stirring time is not especially limited, but is, from the viewpoint of bringing the component (C) into contact with the component (A), preferably 1 min or longer, more preferably 5 min or longer and most preferably 10 min or longer. Then, the maximum time is not especially limited, but is, from the viewpoint of suppressing the deterioration of the component (A), preferably 7 days or shorter, more preferably 3 days or shorter and most preferably 1 day or shorter.

The step of removing the component (B) is not especially limited as long as being capable of removing the component (B), but includes a drying step and a filtration step. The finish judgment criterion of the step of removing the component (B) is preferably a time when a microparticle or a powder has been obtained, more preferably a time when the residue of the component (B) is less than 1% by mass with respect to the total amount of the powder, and most preferably a time when the residue of the component (B) is less than 0.1% by mass with respect to the total amount of the powder. Further from the viewpoint of the environmental consideration, it is preferable that a solvent trap or the like is used for the removed component (B).

The drying step is a step of removing the component (B) by drying at room temperature or evaporation or the like by heating or vacuumizing in a hot air drying oven or the like. The heating of the drying step may suitably be regulated according to the volatility of the component (B), but from the viewpoint of influences such as melting of the component (A) by heat, it is preferable that the heating is carried out preferably at 0 to 80°C, more preferably at 5 to 50°C and most preferably at 10 to 40°C. When the temperature range is in the above range, since the influence on the component (A) is suppressed, it is preferable that the component (B) is one having a volatility in the above range. The drying time is not especially limited, but is, from the viewpoint of suppressing the influence on the component (A), preferably 7 days or shorter, more preferably 3 days or shorter and most preferably 1 day or shorter. The above-mentioned finish judgment criterion of the removal step applies to the finish of the drying step. Further from the viewpoint of the environmental consideration, the drying step may carry out drying under stirring. The stirring in the drying step may use the stirring method in the above dispersion step, or a method of always convecting a content by rotating or vibrating a container. Drying under stirring can prevent agglomeration of the treated curing agent to be produced. A method of drying under stirring includes a method of stirring by an impeller or a stirring bar in a state that the upper part of a stirring container is opened, and a method of rotating a stirring container having an opening for the component (B) to volatilize through, on a ball mill rotary table at a certain speed, but is not limited to these.

The filtration step is a step of filtering out the treated curing agent by a filter paper to remove the component (B). A filtration method is not especially limited, and may be suction filtration. The above-mentioned finish judgment criterion of the removal step applies to the finish of the filtration step.

Then, the treated curing agent produced by the production method, in order to remove agglomerates and impurities, may be subjected to a step of sieving through a sieve or the like. By removing the agglomerates, there can be produced the treated curing agent excellent in the dispersibility when being dispersed in a curable resin described later.

In the present invention, there is provided a curable resin composition using the treated curing agent produced by the above production method. A curable resin usable for the curable resin composition is not especially limited as long as being a component capable of being cured with the treated curing agent. The curable resin specifically includes epoxy resins, (meth)acrylic resins, silicone resins and urethane resins, but is, as aforementioned, from the viewpoint of being used suitably for the amine compound, more preferably an epoxy resin.

The epoxy resin may be solid or liquid and is not especially limited as long as being a compound having one or more epoxy groups, but examples thereof include bisphenol type epoxy resins such as bisphenol A type epoxy resins, bisphenol F type epoxy resins, bisphenol S type epoxy resins and bisphenol AD type epoxy resins, hydrogenated bisphenol type epoxy resins thereof, alkylene glycol type epoxy resins such as 1,2-butanediol diglycidyl ether, 1,3-butanediol diglycidyl ether, 1,4-butanediol diglycidyl ether, ethylene glycol diglycidyl ether, propylene glycol diglycidyl ether, 2,3-butanediol diglycidyl ether, 1,5-pentanediol diglycidyl ether, 1,6-hexanediol diglycidyl ether, neopentyl glycol diglycidyl ether and 1,4-cyclohexanedimethanol diglycidyl ether, novolac type epoxy resins such as phenol novolac type epoxy resins and cresol novolac type epoxy resins, glycidylamine compounds such as N,N-glycidyl-4-glycidyloxyaniline, 4,4'-methylenebis(N,N-diglycidylaniline), tetraglycidyldiaminodiphenylmethane and tetraglycidyl-m-xylylenediamine, and naphthalene type epoxy resins having four glycidyl groups. These may be used singly, or may be used concurrently used in two or more kinds.

Commercially available products of the epoxy resin are not especially limited, but examples thereof include jER828, 1001, 801, 806, 807, 152, 604, 630, 871, YX8000, YX8034, and YX4000 (manufactured by Mitsubishi Chemical Corp.), Epiclon 830, 850, 830LVP, 850CRP, 835LV, HP4032D, 703, 720, 726, and 820 (manufactured by DIC Corporation), EP4100, EP4000, EP4080, EP4085, EP4088, EPU6, EPU7N, EPR4023, EPR1309, and EP4920 (manufactured by ADEKA CORPORATION), TEPIC (manufactured by made by Nissan Chemical Industries, Ltd.), KF-101, KF-1001, KF-105, X-22-163B, and X-22-9002 (manufactured by Shin-Etsu Chemical Co., Ltd.), Denacol EX411, 314, 201, 212, and 252 (manufactured by Nagase Chemtex Corporation), DER-331, 332, 334, 431, and 542 (manufactured by The Dow Chemical Co.), and YH-434 and YH-434L (manufactured by NIPPON STEEL Chemical & Material CO., LTD.). These may be used singly, or may be used as a mixture.

The epoxy resin may further contain a reactive diluent. The reactive diluent mentioned in the present invention is a compound which can reduce the viscosity of the epoxy resin and can be reacted with the curing agent. By adding the reactive diluent, the workability can be improved without the curability being deteriorated. The compound is preferably one having one or two reactive functional groups. From the viewpoint of the reactivity of the epoxy resin with the curing agent, the compound is preferably one having a glycidyl group(s) as the reactive functional group(s).

Commercially available products of the reactive diluent include ED-502, ED-502S, ED-509E, ED-509S, ED-529, ED-503, ED-503G, ED-506, and ED-523T (manufactured by ADEKA CORPORATION), and Denacol EX-810, EX-811, EX-850, EX-851, EX-821, EX-830, EX-832, EX-841, EX-861, EX-920, EX-931, EX-141, EX-145, EX-146, EX-147, EX-192, EX-201, EX-211, and EX-212 (manufactured by Nagase Chemtex Corporation).

Then, in the curable resin composition of the present invention, curing agents other than the treated curing agent of the present invention may be contained. These may be liquid or solid, and are not especially limited, and examples thereof include, as curing agents for epoxy resins, amine compounds, imidazole compounds, adduct-type latent curing agents (reaction products obtained by reacting an amine compound with an epoxy compound, an isocyanate compound or a urea compound), dicyandiamide, hydrazide compounds, boron trifluoride-amine complexes, thiol compounds and acid anhydrides. These may be used singly, or may be used concurrently in two or more kinds.

In the curable resin composition of the present invention, in addition to the above each component, there can be used additives such as silane coupling agents, fillers, storage stabilizers, antioxidants, light stabilizers, rust preventives, tackifiers, plasticizers, colorants, rheology controllers, flame retardants and surfactants, within a range that does not impair the purpose of the present invention.

The storage stabilizers are not especially limited as long as being ones improving the storage life. Examples of the storage stabilizers for epoxy resins include borate ester compounds, phosphoric acid, alkylphosphate esters, p-toluenesulfonic acid and methyl p-toluenesulfonate. Examples of the borate ester compounds include trimethyl borate, triethyl borate, tri-n-propyl borate, triisopropyl borate, tri-n-butyl borate, tris(2-ethylhexyloxy)borane, triphenyl borate and trimethoxyboroxin. As the alkylphosphate esters, trimethyl phosphate, tributyl phosphate and the like can be used, but the alkylphosphate esters are not limited to these. These may be used singly, or may be used concurrently in two or more kinds. By concurrently using the treated curing agent of the present invention and the storage stabilizer, the storage life can be improved.

Applications of the curable resin composition of the present invention are not especially limited, and the curable resin composition can be used suitably for various applications, for example, adhesives, sealants, sealing films, coating agents, lining agents, potting agents, heat dissipating agents, flame retardants and electroconductive agents. With regard to specific applications in the fields of motorcars and transportation devices, the curable resin composition can be used for adhesives, sealing and coating materials and the like for switch parts, vehicle bodies, headlamps, parts in engines, electric parts, structural adhesion portions, driving engines, brake oil tanks and the like. Further, in flat panel displays, the curable resin composition can also be used for adhesion, sealing and the like for liquid crystal displays, organic electroluminescent displays, light-emitting diode displays, and field emission displays. It can also be used for adhesion, sealing and the like for electronic mobile devices such as mobile phones and multifunctional mobile phones, and camera modules. In the recording fields, it can be used for adhesion, sealing and the like for CD, DVD, MD, pickup lenses, hard disc peripherals (members for spindle motors, members for magnetic head actuators, and the like), blu-ray discs, and the like. In the battery fields, it can be used for adhesive, sealing and coating materials and the like for Li batteries, manganese batteries, alkali batteries, nickel batteries, fuel batteries, silicon solar batteries, dye-sensitive solar batteries, organic solar batteries and the like. In optical part fields, it can be used for adhesion, sealing and the like for optical switch peripherals in optical communication systems, optical fiber materials in optical connecter peripherals, optical passive parts, optical circuit parts, optoelectronic integrated circuit peripherals, and the like. Further, in the optical device fields, it can be used for adhesion, sealing and the like for materials for still camera lenses, finder prisms, target prisms, finder covers, light-receiving sensor parts, photographic lenses, and the like.

### EXAMPLES

Then, the present invention will be described in more detail by way of Examples, but the present invention is not limited only to these Examples. Then, in the following Examples and Comparative Examples, unless otherwise specified, the operations were carried out under the condition of room temperature (25°C/a relative humidity of 40 to 50%RH).

### <Production of treated curing agents>

Treated curing agents of the present invention were produced as follows. In each Example, components (A) to (C) and another component described below were charged in amounts described in Table 1 in a stirring vessel, and stirred for 30 min. Thereafter, the stirring vessel was covered with a lid, and a hole of Φ2cm was opened in the center of the lid so that the component (B) was easily volatilized. The stirring vessel was set sideways on a ball mill rotary table, and rotated at 60 rpm while the component (B) was caused to volatilize at room temperature for 12 hours.

### [Checking of agglomerates]

A powder of an obtained treated curing agent was visually observed to check the presence/absence of agglomerates. The case of ○ in the following evaluation criteria was taken as acceptable.
○: no agglomerates were observed.
△: agglomerates of 2 mm or larger were observed.
×: agglomerates or solids of 5 mm or larger were observed.
components (A): solid curing agents
   - Amicure PN-23 (epoxy-amine adduct-type latent curing agent, manufactured by Ajinomoto Fine-Techno Co., Inc., melting point: 100°C, 50% average particle diameter: 11 µm)
   - Fujicure FXE-1000 (urea adduct-type latent curing agent, manufactured by T&K TOKA CO. LTD., melting point: 120°C, 50% average particle diameter: 7 µm)
   - Curezol 2MA-OK (imidazole compound, manufactured by SHIKOKU KASEI HOLDINGS CORPORATION, melting point: 260°C (decomposing), 50% average particle diameter: 8 µm)
component (B): a solvent that does not dissolve the component (A)
   - normal hexane
component (B'): solvents other than the component (B) (in the case of Amicure PN-23)
   - toluene
   - methyl ethyl ketone
components (C): metal alkoxide compounds
   - Orgatix TA-8 (titanium tetraisoproxide, manufactured by Matsumoto Fine Chemical Co. Ltd.)
   - Orgatix ZA-45 (zirconium tetra-normal propoxide, manufactured by Matsumoto Fine Chemical Co. Ltd.)
components (C')
   - KBM-403 (3-glycidoxypropyltrimethoxysilane, manufactured by Shin-Etsu Chemical Co. Ltd.)
   - KBM-503 (3-methacryloxypropyltrimethoxysilane, manufactured by Shin-Etsu Chemical Co. Ltd.)
Another component
   - AEROSIL R805 (surface-hydrophobized silica, manufactured by Nippon Aerosil Co. Ltd., 50% average particle diameter: 12 nm)

**[Table 1]**

| | | Ex. 1 | Ex. 2 | Ex. 3 | Ex. 4 | Ex. 5 | Ex. 6 | Ex. 15 | Comp. Ex. 1 | Comp. Ex. 2 | Comp. Ex. 3 | Comp. Ex. 4 | Comp. Ex. 14 |
|---|---|---|---|---|---|---|---|---|---|---|---|---|---|
| component (A) | Amicure PN-23 | 100 | 100 | 100 | | | 100 | 100 | 100 | 100 | 100 | 100 | 100 |
| | Fujicure FXE-1000 | | | | 100 | | | | | | | | |
| | Curezol 2MA-OK | | | | | 100 | | | | | | | |
| component (B) | normal hexane | 300 | 300 | 300 | 300 | 300 | 300 | 300 | | | 300 | 300 | 300 |
| component (B') | toluene | | | | | | | | 300 | | | | |
| | methyl ethyl ketone | | | | | | | | | 300 | | | |
| component (C) | Orgatix TA-8 | 2 | 5 | 10 | 5 | 5 | | 2 | 5 | 5 | | | |
| | Orgatix ZA-45 | | | | | | 5 | | | | | | |
| component (C') | KBM-403 | | | | | | | | | | 5 | | |
| | KBM-503 | | | | | | | | | | | 5 | |
| Another component | AEROSIL R805 | | | | | | | 2 | | | | | 2 |
| Total | | 402 | 405 | 410 | 405 | 405 | 405 | 404 | 405 | 405 | 400 | 400 | 402 |
| Checking of agglomerates | | ○ | ○ | ○ | ○ | ○ | ○ | ○ | × | × | Δ | Δ | ○ |

In Examples 1 to 3, Orgatix TA-8 was used as the component (C), and the addition amount thereof was varied, and powders having no agglomerates were obtained. In Examples 4 and 5, Fujicure FXE-1000 and Curezol 2MA-OK were used, respectively, in place of the component (A) of Example 2, and powders having no agglomerates were obtained. In Example 6, Orgatix ZA-45 was used in place of the component (C) of Example 2, and a powder having no agglomerates was obtained. In Example 15, the surface-hydrophobized silica was further added as the another component, and a powder having no agglomerates was obtained. By contrast, in Comparative Examples 1 and 2, respectively, toluene and methyl ethyl ketone, which were solvents capable of dissolving Amicure PN-23 being the component (A), were used in place of the component (B), but in either case, a treated curing agent obtained after the component (B) was dried fused and ended in turning to a mass of solid. Comparative Examples 3 and 4 were the cases where the component (B) of Example 2 was replaced by KBM-403 and KBM-503, respectively, but in either case, agglomerates of 2 mm or larger were resultantly observed.

The treated curing agents obtained in the above Examples 1, 2, 4 to 6 and 15, and untreated curing agents which had not been treated were used as curing agents for curable resin compositions.

### <Production of curable resin compositions>

Curable resin compositions of the present invention were produced as follows. Components described below were charged in amounts described in Table 2 to 5 in a stirring vessel, and stirred for 30 min. Hereinafter, the curable resin compositions are also called simply the compositions.

### [Measurement of the viscosity]

The measurement of the viscosity used a cone plate-type viscometer, and the viscosity at 25°C was measured according to JIS K6833-1:2008. The measurement after production was recorded as the initial viscosity (Pa·s); and the measurement after storage was recorded as the viscosity after storage (Pa·s). [×] in test results represents being unmeasurable because of having been cured.

### [Rate of change in viscosity]

Each composition was allowed to stand still in a thermostatic chamber at 40°C for a period determined for the each composition; and thereafter, the measurement of the viscosity was carried out under the same condition as in the initial viscosity measurement and the measurement was recorded as the viscosity after storage. The value of the calculation formula ((viscosity after storage/initial viscosity) - 1) was calculated and the rate of change in viscosity (%) from the initial viscosity was recorded. With regard to the acceptance/rejection of Examples, the case where the rate of change in viscosity of a composition using a treated curing agent was lower than that of a composition using an untreated curing agent was taken as acceptable. Then, × indicates the result of being unmeasurable because of solid formation.

### [Tensile shear adhesive strength test]

By using the composition obtained in each of Examples 7, 8 and 13 and Comparative Examples 5, 7 and 12, a test specimen was fabricated under the following condition, and was subjected to a tensile shear adhesive strength test. The composition obtained in each of Examples 7, 8 and 13 and Comparative Examples 5, 7 and 12 was coated on an SPCC-SD-made test piece of 25 mm in width × 100 mm in length × 1.6 mm in thickness. Thereafter, another SPCC-SD-made test piece was laminated so that the overlapped surface became 25 mm × 10 mm, and fixed with a clip. Then, the composition was cured in a hot air drying oven set at 100°C for 60 min, and thereafter allowed to stand in a thermostatic chamber at 25°C for 60 min to thereby obtain the test specimen. Then, by using the test specimen, the tensile shear adhesive strength (unit: MPa) was measured by a universal tensile tester (tensile rate: 10 mm/min) at 25°C according to JIS K6850:1999. [-] in the test results indicates no measurement.
Epoxy resin
   - jER 828 (bisphenol A type epoxy resin, manufactured by Mitsubishi Chemical Corp.)
Reactive diluent
   - ED-523L (neopentyl glycol diglycidyl ether, manufactured by ADEKA CORPORATION)
Epoxy resin curing agents
   - Example 1
   - Example 2
   - Example 4
   - Example 5
   - Example 6
   - Example 15
   - Amicure PN-23 (untreated curing agent, epoxy-amine adduct-type latent curing agent, manufactured by Ajinomoto Fine-Techno Co., Inc .)
   - Fujicure FXE-1000 (untreated curing agent, urea adduct-type latent curing agent, manufactured by T&K TOKA CO. LTD.)
   - Curezol 2MA-OK (untreated curing agent, imidazole compound, manufactured by SHIKOKU KASEI HOLDINGS CORPORATION)
   - PEMP (thiol compound, pentaerythritol tetrakis(3-mercaptopropionate), manufactured by SC Organic Chemical Co. Ltd.)
   - Rikacid MH-700N (acid anhydride, a mixture of 4-methylcyclohexane-1,2-dicarboxylic anhydride and cyclohexane-1,2-dicarboxylic anhydride, manufactured by New Japan Chemical Co. Ltd.)
Metal alkoxide compounds
   - Orgatix TA-8 (titanium tetraisopropoxide, manufactured by Matsumoto Fine Chemical Co. Ltd.)
   - Orgatix ZA-45 (zirconium tetra-normal propoxide, manufactured by Matsumoto Fine Chemical Co. Ltd.)

**[Table 2]**

| | | Ex. 7 | Ex. 8 | Ex. 9 | Ex. 16 | Comp. Ex. 5 | Comp. Ex. 6 | Comp. Ex. 7 | Comp. Ex. 8 | Comp. Ex. 15 |
|---|---|---|---|---|---|---|---|---|---|---|
| Epoxy resin | jER828 | 100 | 100 | 100 | 100 | 100 | 100 | 100 | 100 | 100 |
| Epoxy resin curing agent | Example 1 | 20.4 | | | | | | | | |
| | Example 2 | | 21 | | | | | | | |
| | Example 6 | | | 21 | | | | | | |
| | Example 15 | | | | 20.8 | | | | | |
| | Comparative Example 14 | | | | | | | | | 20.4 |
| | Amicure PN-23 (untreated curing agent) | | | | | 20 | 20 | 20 | 20 | |
| Metal alkoxide compound | Orgatix TA-8 | | | | | | 0.4 | 1 | | |
| | Orgatix ZA-45 | | | | | | | | 1 | |
| Total | | 120.4 | 121 | 121 | 120.8 | 120 | 120 | 120 | 121 | 120.4 |
| Viscosity measurement [Pa.s] | Initial viscosity | 21 | 21 | 20 | 24 | 22 | 21 | 19 | 20 | 25 |
| | Viscosity after storage (storage period: 40°C × 48 hours) | 21 | 21 | 22 | 24 | 22 | 25 | 25 | 25 | 26 |
| | Viscosity after storage (storage period: 40°C × 168 hours) | 21 | 20 | 25 | 24 | 30 | 31 | 30 | 30 | 28 |
| | Viscosity after storage (storage period: 40°C × 720 hours) | 27 | 25 | 29 | 25 | 39 | 45 | 57 | 60 | 34 |
| Rate of change in viscosity [%] | (viscosity after storage/initial viscosity) - 1 | 29% | 18% | 43% | 6% | 74% | 114% | 198% | 200% | 35% |
| Tensile shear adhesive strength test [MPa] | | 13 | 12 | - | - | 11 | - | 12 | - | - |

Examples 7 to 9 and 16 were compositions using the treated curing agents produced in Examples 1, 2, 6 and 15, respectively, and by contrast, Comparative Example 5 was a composition using Amicure PN-23 being an untreated curing agent; and it was confirmed that any of rates of change in viscosity of Examples 7 to 9 and 16 was lower than that of Comparative Example 5 and the differences from the initial viscosities were smaller. Then, it was confirmed that the tensile shear adhesive strength test also gave equal results. Comparative Examples 6 to 8 were compositions containing a metal alkoxide compound used for the treated curing agents of Examples 1, 2, 6 and 15 added directly thereto; and it was confirmed that the rates of change in viscosity of Comparative Examples 6 to 8 were higher than those of the compositions using the treated curing agents or the untreated curing agent. From the rate of change in viscosity and the tensile shear adhesive strength test, it was confirmed that the compositions could be produced which were improved in the storage life and had no influence on the physical property of the cured material. Then, Comparative Example 15 corresponded to an Example 16 containing no Orgatix TA-8, and it was found that the rise in viscosity of Comparative Example 15 was higher than that of Example 16.

**[Table 3]**

| | | Example 10 | Comparative Example 9 |
|---|---|---|---|
| Epoxy resin | jER828 | 100 | 100 |
| Epoxy resin curing agent | Example 4 | 21 | |
| | Fujicure FXE-1000 (untreated curing agent) | | 20 |
| Total | | 121 | 120 |
| Viscosity measurement [Pa.s] | Initial viscosity | 23 | 23 |
| | Viscosity after storage (storage period: 40°C × 48 hours) | 25 | 25 |
| | Viscosity after storage (storage period: 40°C × 168 hours) | 29 | 37 |
| | Viscosity after storage (storage period: 40°C × 720 hours) | 42 | 89 |
| Rate of change in viscosity [%] | (viscosity after storage/initial viscosity) - 1 | 80% | 282% |

Example 10 was a composition using the treated curing agent produced in Example 4, and by contrast, Comparative Example 9 was a composition using Fujicure FXE-1000 being an untreated curing agent; and it was confirmed that the rate of change in viscosity of Example 10 was lower than that of Comparative Example 9 and the difference from the initial viscosity was smaller, and it was thereby confirmed that the storage life was improved.

**[Table 4]**

| | | Example 11 | Example 12 | Comparative Example 10 | Comparative Example 11 |
|---|---|---|---|---|---|
| Epoxy resin | jER828 | 100 | 100 | 100 | 100 |
| | Example 2 | 21 | | | |
| | Example 5 | | 2.1 | | |
| | Amicure PN-23 (untreated curing agent) | | | 2 | |
| | Curezol 2MA-OK (untreated curing agent) | | | | 2 |
| | Rikacid MH-700N | 90 | 90 | 90 | 90 |
| Total | | 192.1 | 192.1 | 192 | 192 |
| Viscosity measurement [Pa·s] | Initial viscosity | 0.5 | 0.6 | 0.5 | 0.6 |
| | Viscosity after storage (storage period: 40°C × 48 hours) | 1.0 | 0.9 | 11 | 1.0 |
| | Viscosity after storage (storage period: 40°C × 168 hours) | 1.8 | 1.5 | 21 | 2.1 |
| | Viscosity after storage (storage period: 40°C × 720 hours) | 3.0 | 2.5 | 40 | 10 |
| Rate of change in viscosity [%] | (viscosity after storage/initial viscosity) - 1 | 491% | 350% | 7774% | 1701% |

Examples 11 and 12 were compositions using the treated curing agents produced in Examples 2 and 5, respectively, and Rikacid MH-700N as another curing agent, and by contrast, Comparative Examples 10 and 11 were compositions using Amicure PN-23 and Curezol 2MA-OK being untreated curing agents, respectively, and Rikacid MH-700N as the another curing agent; and the rates of change in viscosity of Examples 11 and 12 were lower than those of Comparative Examples 10 and 11 of the untreated curing agents, respectively, and the difference from the initial viscosity was smaller, and it was thereby confirmed that the storage life was improved.

**[Table 5]**

| | | Example 13 | Comparative Example 12 |
|---|---|---|---|
| Epoxy resin | jER828 | 100 | 100 |
| | Example 4 | 5.3 | |
| | Fujicure FXE-1000 (untreated curing agent) | | 5 |
| | PEMP | 50 | 50 |
| Total | | 155.3 | 155 |
| Viscosity measurement [Pa·s] | Initial viscosity | 2.9 | 3.1 |
| | Viscosity after storage (storage period: 40°C × 48 hours) | 3.3 | × |
| | Viscosity after storage (storage period: 40°C × 168 hours) | 10.9 | × |
| Rate of change in viscosity [%] | (viscosity after storage/initial viscosity) - 1 | 271% | × |
| Tensile shear adhesive strength test [MPa] | | 21 | 20 |

Example 13 was a composition using, in addition to Example 5, PEMP as another curing agent, and it was confirmed that the rate of change in viscosity was lower than that of Comparative Example 12 using an untreated curing agent, and the difference from the initial viscosity was smaller. Then, also in the tensile shear adhesive strength test for Example 13, the result of being equal to the case of the untreated curing agent was confirmed. From the rate of change in viscosity and the tensile shear adhesive strength test, it was confirmed that the compositions could be produced which were improved in the storage life and had no influence on the physical property of the cured material.

**[Table 6]**

| | | Example 14 | Comparative Example 13 |
|---|---|---|---|
| Epoxy resin | jER828 | 70 | 70 |
| | ED-523L | 30 | 30 |
| Epoxy resin curing agent | Example 1 | 20.4 | |
| | Amicure PN-23 (untreated curing agent) | | 20 |
| Total | | 120.4 | 120 |
| Viscosity measurement [Pa·s] | Initial viscosity | 0.67 | 0.65 |
| | Viscosity after storage (storage period: 40°C × 48 hours) | 0.70 | 0.82 |
| | Viscosity after storage (storage period: 40°C × 168 hours) | 0.86 | × |
| Rate of change in viscosity [%] | (viscosity after storage/initial viscosity) - 1 | 28% | × |

In Example 14 and Comparative Example 13, there was checked the storage stability in the case of containing the epoxy resin and further the reactive diluent. Although reactive diluents having a low molecular weight easily dissolve latent curing agents, and are likely to deteriorate the storage life, in Example 14, it was confirmed that even under the poor condition for the storage life, the effect of improving the storage life was good. By contrast, Comparative Example 13, since using an untreated curing agent, formed a solid material and the measurement of the viscosity could not be carried out.

### [Reaction initiation temperature]

Then, compositions were each fabricated by using a treated curing agent having a different content of the component (C) and an untreated curing agent as curing agents, and their reaction initiation temperature was measured. The reaction initiation temperature was measured by using differential scanning calorimetry (DSC), and the results are shown in Tables 1 and 2. Here, the DSC measurement used DSC110, manufactured by Seiko Instruments Inc., and was carried out in a nitrogen atmosphere at a temperature-rise rate of 10°C/min from 30 to 200°C. The reaction initiation temperature was a temperature at which the exothermic peak rose in a graph of DSC, and the temperature on the intersection of a base line and a tangent line on the inflection point of the exothermic peak was taken as the reaction initiation temperature.

**[Table 7]**

| | | Reference Example 1 | Reference Example 2 | Reference Example 3 | Reference Example 4 |
|---|---|---|---|---|---|
| Epoxy resin | jER828 | 100 | 100 | 100 | 100 |
| Epoxy resin curing agent | Example 1 | 20.4 | | | |
| | Example 2 | | 21 | | |
| | Example 3 | | | 22 | |
| | Amicure PN-23 (untreated curing agent) | | | | 20 |
| Total | | 120.4 | 121 | 122 | 120 |
| Reaction initiation temperature [°C] | | 113 | 121 | 132 | 111 |

As described as Reference Examples 1 to 4, the treated curing agent of the present invention shifted the reaction initiation temperature to the higher-temperature side by increasing the content of the component (C). Since the reaction to heat was thereby suppressed, the storage life could be improved.

From the above results, it was confirmed that the curing agents obtained by mixing and dispersing the component (A): a solid curing agent, the component (B): a solvent that does not dissolve the component (A), and the component (C): a metal alkoxide compound, and thereafter removing the component (B) could suppress the viscosity change of the curable resin compositions and had no influence on the physical property of the cured material.

### INDUSTRIAL APPLICABILITY

The curing agent of the present invention, since being capable of suppressing the viscosity change of the curable resin composition and has no influence on the physical property of the cured material, can suitably be used in various applications such as adhesives, sealants, sealing films, coating agents, lining agents, potting agents, heat dissipating agents, flame retardants and electroconductive agents which have been made into one-pack type ones.

The present application is based on Japanese Patent Application No. 2021-187465, filed on November 18, 2021, the entire disclosure contents of which are incorporated herein by reference.

## Claims

1. A treated curing agent obtained by mixing and dispersing the following components (A) to (C) and thereafter removing the component (B):
component (A): a curing agent being solid at 25°C;
component (B): a solvent that does not dissolve the component (A); and
component (C): a metal alkoxide compound.

2. The treated curing agent according to claim 1, wherein the metal in the component (C) is titanium or zirconium.

3. The treated curing agent according to claim 1, wherein the component (C) is represented by the general formula M(OR¹)ₙ, wherein M is a metal atom, and R¹ are each independently an organic group.

4. The treated curing agent according to claim 1, wherein the component (A) is a curing agent having thermocurability and being solid at 25°C.

5. The treated curing agent according to claim 1, wherein the component (A) is an amine compound.

6. The treated curing agent according to claim 5, wherein the component (A) is a powdery amine compound.

7. The treated curing agent according to claim 1, further comprising no solvent that dissolves the component (A).

8. The treated curing agent according to claim 1, produced only with the components (A) to (C).

9. The treated curing agent according to claim 1, produced by mixing a silica as an additional component in the step of mixing the components (A) to (C).

10. The treated curing agent according to claim 1, produced only with the components (A) to (C) and a silica.

11. The treated curing agent according to claim 9, wherein an average particle diameter of the silica is smaller than an average particle diameter of the component (A).

12. A curing agent comprising the following components (A) and (C) and a hydrophobic silica:
component (A): a curing agent being solid at 25°C; and
component (C): a metal alkoxide compound.

13. The curing agent according to claim 12, containing only the following components (A) and (C) and the hydrophobic silica:
component (A): a curing agent being solid at 25°C; and
component (C): a metal alkoxide compound.

14. The curing agent according to claim 12 or 13, wherein an average particle diameter of the hydrophobic silica is smaller than an average particle diameter of the component (A).

15. A method for producing a treated curing agent according to any one of claims 1 to 11, comprising mixing and dispersing the following components (A) to (C) and thereafter removing the component (B) to obtain the treated curing agent:
component (A): a curing agent being solid at 25°C;
component (B): a solvent that does not dissolve the component (A); and
component (C): a metal alkoxide compound.

16. The production method according to claim 15, wherein only the components (A) to (C) are mixed.

17. The production method according to claim 15, wherein a silica is mixed as an additional component in the step of mixing the components (A) to (C).

18. The production method according to claim 17, wherein only the components (A) to (C) and the silica are mixed.

19. A curable resin composition comprising a curable resin and a treated curing agent according to any one of claims 1 to 11.

20. The curable resin composition according to claim 19, wherein the curable resin is an epoxy resin.

21. A cured material obtained by curing a curable resin composition according to claim 19.
